(19) Europäisches Patentamt

European Patent Office

Office européen des brevets

(11) **EP 1 216 010 B1**

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(51) Int Cl.⁷: **A61C 8/00**

(21) Anmeldenummer: **99942698.4**

(22) Anmeldetag: **22.09.1999**

(86) Internationale Anmeldenummer:
**PCT/CH1999/000452**

(87) Internationale Veröffentlichungsnummer:
**WO 2001/021091 (29.03.2001 Gazette 2001/13)**

(54) **SCHRAUBENFÖRMIGES ENOSSALES DENTALIMPLANTAT**

SCREW-TYPE INTRAOSSAL DENTAL IMPLANT

IMPLANT DENTAIRE INTRA-OSSEUX EN FORME DE VIS

(84) Benannte Vertragsstaaten:
**AT BE CH CY DE DK ES FI FR GB GR IE IT LI LU MC NL PT SE**

(43) Veröffentlichungstag der Anmeldung:
**26.06.2002 Patentblatt 2002/26**

(73) Patentinhaber: **Lipat Consulting AG**
**4051 Basel (CH)**

(72) Erfinder: **JOOS, Ulrich**
**D-48147 Münster (DE)**

(74) Vertreter: **Heinen, Detlef et al**
**c/o A.Braun Braun Héritier Eschmann AG,**
**Holbeinstrasse 36-38**
**4051 Basel (CH)**

(56) Entgegenhaltungen:
**DE-A- 4 041 378          DE-A- 19 545 014**
**NL-A- 8 200 711**

**Beschreibung**

Die vorliegende Erfindung bezieht sich auf ein Dentalimplantat, das zum Einsetzen in den Kieferknochen bestimmt ist und äusserlich ein Gewinde aufweist. Insoweit unterscheidet sich das erfindungsgemässe Implantat gattungsmässig von Blatt- und Zylinderimplantaten als den übrigen Formen enossaler Dentalimplantate. Speziell betrifft die Erfindung die äussere Geometrie des Implantats, die Massverhättnisse am Implantatkörper sowie die Kenngrössen des Aussengewindes mit dem Ziel, sowohl die Primär- als auch die Sekundärstabilität zu verbessern und damit den Langzeiterfolg eingesetzter Implantate zu sichern.

Stand der Technik

Zur Verkürzung des Sprachgebrauchs wird bis auf weiteres die Kurzform "Implantat" benutzt, obwohl sich die hiesige Erfindung mit Dentatimplantaten befasst. Eine Übersicht zu den im Dentalbereich gängigen Implantatformen findet sich bei Spiekermann, H.: Implantologie, Farbatlanten der Zahnmedizin, Georg Thieme Verlag Stuttgart und New York, 1994, Bd. 10, S. 15. Hiernach werden Blatt-, Zylinder- und Schraubenimplantate unterschieden. Die für sehr spezifische Anwendungen möglicherweise vorteilhaften Blattimplantate bleiben völlig ausser Betracht. Die Zylinderimplantate besitzen einen durchgehenden oder in Stufen abgesetzten zylindrischen Körper. Die Wurzelpartie kann Durchbrüche zur besseren Knochenintegration aufweisen und die am apikalen Ende liegende Implantatspitze hat die Form einer Halbkugel oder einer abgerundeten Kuppe. Die Wurzelpartie hat eine rauhe bis profilierte Oberfläche, welche man durch Materialauftrag oder -abtrag erzeugt. Der implantathals bzw. -kopf ist zumeist glatt.

Die Schraubenimplantate besitzen ein sich zumindest über den wesentlichen Anteil der Wurzelpartie erstreckendes Aussengewinde. Deren Implantatkörper sind ebenfalls zylindrisch mit einer halbkugelförmigen, abgerundeten, stumpfwinkligen oder parabolischen (s. US 4,626,214) Implantatspitze. Auch leicht konische Formen sind bekannt (s. US 4,713,003). Die Implantathälse sind am Übergang von der Wurzelpartie zumeist ebenfalls zylindrisch, während die Köpfe sich nach koronal konisch verjüngen, trompetenförmig erweitem oder einen Aussenvielkant aufweisen.

Die prinzipiell zylindrische Form der Wurzelpartie hat sich als nicht optimal für die postoperativ gewünschte Primärstabilität des eingesetzten Implantats erwiesen. Ferner ist die Standzeit der Implantate in manchen Fällen unzureichend; das eingesetzte implantat lockert sich nach wenigen Jahren vorzeitig. Untersuchungen ergaben, dass die vorzeitige Lockerung durch eine Knochenresorbtion um das eingesetzte Implantat herum verursacht wird, welche auf unzureichende Krafteinleitung über die existenten Implantatformen auf den Knochen zurückzuführen ist. Knochendehnungen zwischen 1000 - 4000 microstrains werden als remodellationsrelevant definiert. Unter 1000 microstrains gelten die Werte als unterschwellig mit der Folge einer Mineralisationsabnahme und Bindegewebsbildung. Werte über 4000 microstrains gelten als überschwellig mit der Folge einer Knochenresorbtion (s. Barbier, L. et. al.: Finite element analysis of nonaxial versus axial loading of oral implants in the mandibile of the dog. in J. Oral Rehabil 1998, 25(11): 847-858).

Ein Dentalimplantat gemäß dem Oberbegriff von Anspruch 1 ist aus der DE-A-4041378 bekannt.

Aufgabe der Erfindung

Angesichts der aufgezeigten Unvollkommenheiten der bis dato bekannten Dentalimplantate liegt der Erfindung die Aufgabe zugrunde, eine Implantatform vorzuschlagen, welche dazu beiträgt, die Primärstabilität eingesetzter implantate zu steigern, so dass das Implantat für die postoperativen Arbeiten beim Aufbau der Suprastrukturen und im Gebrauch durch den Patienten zeitlich sofort belastbar ist. Als sofortige Belastbarkeit gilt die unmittelbar nach dem implantieren erreichte Primärstabilität. Es versteht sich aber, vor einer tatsächlichen Belastung des Implantats ist es unter Umständen von Vorteil, einige Tage der wesentlichsten Wundheilphase abzuwarten. Ferner soll mittels einer optimierten Implantatform die natürliche Krafteinleitung in den Knochen - vergleichbar wie bei einem echten Zahn - erhalten bleiben und dadurch der Langzeiterfolg in höherem Masse gesichert werden.

Übersicht über die Erfindung

Das Dentalimplantat besitzt eine zuunterst, apikal gelegene Implantatspitze und eine sich zur Implantatspitze hin erstreckenden Wurzelpartie, die zum Einsetzen in den Kieferknochen bestimmt ist. An die Wurzelpartie setzt der sich nach koronal erstreckende Implantathals an, welcher im implantierten Zustand innerhalb der Gingiva zu liegen kommt. Zumindest anteilig über die Wurzelpartie ist das Implantat mit einem Aussengewinde versehen, das selbstschneidend sein kann. Das Wesensmerkmal besteht darin, dass die Wurzelpartie eine im Prinzip parabolische Aussenkontur mit der Implantatspitze als Scheitelpunkt aufweist.

Die nachstehende Beschreibung bezieht sich auf bevorzugte Ausführungsbeispiele der Erfindung.

Die Wurzelpartie und der Implantathals grenzen an einer theoretischen Kammlinie aneinander, wobei die Wurzelpartie die sich in axialer y-Richtung erstreckende maximale Länge $l_{max}$ aufweist. An der Kammlinie hat die Wurzelpartie den sich in radialer x-Richtung erstreckenden maximalen Radius $r_{max}$. In einem kartesischen x-y-Koordinatensystem eingeordnet und mit der Implantatspitze in dessen Ursprung positioniert, folgt die parabolische Aussenkontur der Beziehung $l_y = K \cdot 4r_x^2$, mit:

$l_y \rightarrow$     als den jeweiligen Ordinatenwert;

$r_x \rightarrow$     dem zugehörigen Abszissenwert; und

$K \rightarrow$     als Konstante , die sich aus der Beziehung $K = l_{max} : 4r_{max}^2$ ergibt.

Der maximale Radius $r_{max}$ beträgt zwischen 1.0 mm und 3.0 mm; vorzugsweise liegt er im Bereich von 1.5 mm bis 2.0 mm. Die maximale Länge $l_{max}$ der Wurzelpartie korreliert mit der Steigung des Aussengewindes, wobei letzteres mit Abstand vor der Kammlinie endet. Der Abstand beträgt vorzugsweise 1.0 mm bis 4.0 mm. Dieser Abstand wird durch die Stärke der kortikalen Durchtrittszone am marginalen Knochen und der Länge des Implantats definiert. Um eine optimale Krafteinleitung in diesem Bereich in den Knochen zu gewährleisten, wird der Abstand des Aussengewindes von der Kammlinie mit zunehmender Wurzellänge grösser. Überdies trägt der Abstand dazu bei, den sehr kritischen Eintritt von Bakterien in das Implantatbett auszuschliessen.

Die Gewindezähne haben an der Wurzelpartie eine sich in die y-Richtung erstreckende Höhe im Bereich von 0.3 mm und eine sich in x-Richtung erstreckende Länge im Bereich von 0.25 mm bis 0.5 mm. Mit zunehmender maximaler Länge der Wurzelpartie nimmt die Länge der Gewindezähne ab.

Das Implantat besteht aus bioverträglichem Material mit geeigneten Festigkeitseigenschaften. Hierfür kommen Titan, Titanbasis-Legierungen, andere Metalle oder Metalllegierungen, Keramik, Glaskeramik oder keramik-ähnliche Materialien sowie biokompatible Kunststoffe in Betracht. Die Wurzelpartie hat eine rauhe Oberfläche, welche z. B. plasma- oder keramik-beschichtet ist oder z.B. einer chemischen, elektro-chemischen, mechanischen oder Laserbehandlung unterzogen wurde. Ein aus Titan oder einer Titanbasis-Legierung bestehender Implantathals ist poliert. Auch kann der Implantathals mit Keramik oder mit keramik-ähnlichem Material oder mit Hydroxylapatit beschichtet sein. Der Implantathals hat eine in y-Richtung bemessene Höhe im Bereich von 2.0 mm und ist zylindrisch oder nach koronal trompetenförmig bzw. konisch erweitert oder verengt. Das Dentalimplantat ist wahlweise als sogenanntes ein- oder zweiphasiges Implantat anwendbar.

Kurzbeschreibung der beigefügten Zeichnungen

Es zeigen:

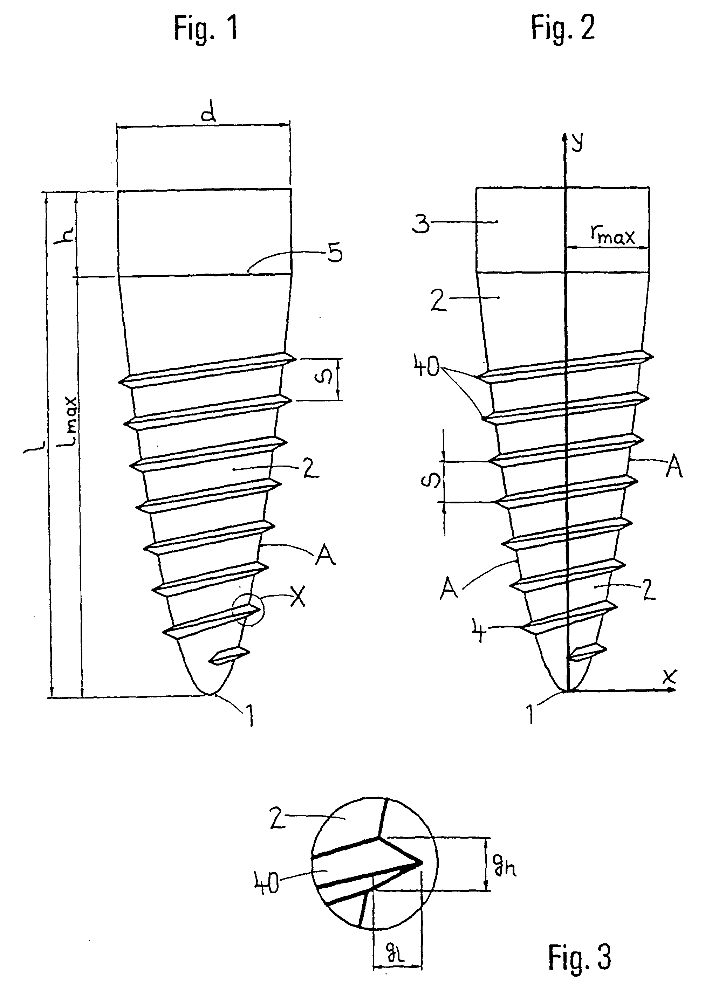

Figur 1 -     ein erfindungsgemässes Implantat in der Frontansicht;

Figur 2 -     das Implantat gemäss Figur 1 im x-y-Koordinatensystem; und

Figur 3 -     das Detail X aus Figur 1 in der Vergrösserung.

Ausführungsbeispiel

Mit Bezug auf die beiliegenden Zeichnungen erfolgt nachstehend die detaillierte Beschreibung eines Ausführungsbeispiels zum erfindungsgemässen Dentalimplantat.

Das Implantat hat zuunterst die apikal gelegene Implantatspitze **1**, zu der sich von koronal die Wurzelpartie **2** erstreckt, welche zum Einsetzen in den Kieferknochen bestimmt ist. Oben an die Wurzelpartie **2** grenzt an der theoretischen Kammlinie **5** der sich nach koronal erstreckende Implantathals **3** an, welcher zum Liegen innerhalb der Gingiva bestimmt ist. Von der Implantatspitze **1** bis unterhalb der Kammlinie **5** ist die Wurzelpartie **2** mit einem Aussengewinde **4** versehen, das vorzugsweise selbstschneidend ist und die Steigung S besitzt. Das Aussengewinde **4** endet mit Abstand unterhalb der Kammlinie **5**; der Abstand liegt vorzugsweise im Bereich von 1.0 mm bis 4.0 mm. Die Wurzelpartie **2** hat eine im wesentlichen parabolische Aussenkontur **A** mit der Implantatspitze **1** als Scheitelpunkt.

Am Implantat lassen sich folgende Masse definieren:

$l \rightarrow$     als Gesamtlänge, mit z.B. 12.0 mm, die sich in axialer y-Richtung, auf der Ordinatenachse, erstreckt;

$l_{max} \rightarrow$     als Anteil der Gesamtlänge **l** und maximale Länge der Wurzelpartie **2**;

$h \rightarrow$     als Anteil der Gesamtlänge **l** und Höhe des Implantathalses **3**;

$r_{max} \rightarrow$     als sich in radialer x-Richtung, auf der Abszissenachse, erstreckender maximaler Radius der Wurzelpartie **2** an der Kammlinie **5**;

$d \rightarrow$     als Nenndurchmesser des Implantats, der sich aus $2 \cdot r_{max}$ ergibt;

$g_h \rightarrow$     als die sich in y-Richtung erstreckende Höhe der Gewindezähne **40** des Aussengewindes **4** auf der Wurzelpartie **2**; und

$g_l \rightarrow$ als die sich in x-Richtung erstreckende Länge der Gewindezähne **40**.

Setzt man das Implantat mit seiner parabolischen Aussenkontur **A** in ein kartesisches x-y-Koordinatensystem und positioniert hierbei die Implantatspitze **1** im Ursprung des Koordinatensystems, so folgt die Aussenkontur **A** der Beziehung $l_y = K \cdot 4r_x^2$. Hierbei stellen dar:

$l_y \rightarrow$ den jeweiligen Ordinatenwert für die Bildung der Aussenkontur **A;**
$r_x \rightarrow$ den zum Ordinatenwert $l_y$ zugehörigen Abszissenwert; und;
$K \rightarrow$ als Konstante, die sich aus der Beziehung $K = l_{max} : 4r_{max}^2$ ergibt.

Der maximale Radius $r_{max}$ beträgt zwischen 1.0 mm und 3.0 mm, und liegt vorzugsweise im Bereich von 1.5 mm bis 2.0 mm. Damit ergeben sich beispielhaft bei einem angenommenen $r_{max}$ = 2.0 mm (Nenndurchmesser des Implantats **d** = 4.0 mm) folgende Werte für die Konstante **K** sowie für die Beziehungen zur Bestimmung der Ordinatenwerte $l_y$ und Abszissenwerte $r_x$ der Aussenkontur **A:**

| Länge $l_{max}$ der Wurzelpartie [mm] | $l_y$ ; $r_x$ | Konstante **K** |
|---|---|---|
| 6 | $l_y = K \cdot 4r_x^2$ | 0.375 |
| 8 | $l_y = K \cdot 4r_x^2$ | 0.500 |
| 10 | $l_y = K \cdot 4r_x^2$ | 0.625 |
| 12 | $l_y = K \cdot 4r_x^2$ | 0.750 |
| 14 | $l_y = K \cdot 4r_x^2$ | 0.875 |
| 16 | $l_y = K \cdot 4r_x^2$ | 1.000 |

Die maximale Länge $l_{max}$ der Wurzelpartie **2** korreliert mit der Steigung **S** des Aussengewindes (**4**).
Damit ergeben sich beispielhaft bei einem angenommenen $r_{max}$ = 2.0 mm (Nenndurchmesser des Implantats **d** = 4.0 mm) und angenommenen maximalen Längen $l_{max}$ folgende Relationen zur Steigung (**S**) des Aussengewindes **4**:

| Länge $l_{max}$ der Wurzelpartie [mm] | Steigung (**S**) [mm] |
|---|---|
| 6 | 0.65 |
| 8 | 1.00 |
| 10 | 1.00 |
| 14 | 1.00 |
| 16 | 1.00 |

Das Aussengewinde (**4**) an der Wurzelpartie (**2**) mit seinen Gewindezähnen (**40**) weist z.B. folgende Werte auf:

- eine sich in die y-Richtung erstreckende Höhe $g_h$ der Gewindezähne **40** im Bereich von 0.3 mm; und
- eine sich in x-Richtung erstreckende Länge $g_l$ der Gewindezähne **40** im Bereich von 0.25 mm bis 0.5 mm.

Mit zunehmender maximaler Länge $l_{max}$ der Wurzelpartie **2** nimmt die Länge $g_l$ der Gewindezähne **40** ab.
Damit ergeben sich beispielhaft bei einem angenommenen $r_{max}$ = 2.0 mm (Nenndurchmesser des Implantats **d** = 4.0 mm) folgende Werte für das Aussengewinde **4** mit seinen Gewindezähnen **40**:

| Länge $l_{max}$ der Wurzelpartie [mm] | Höhe $g_h$ der Gewindezähne [mm] | Länge $g_l$ der Gewindezähne [mm] |
|---|---|---|
| 6 | 0.30 | 0.40 |
| 8 | 0.30 | 0.40 |
| 10 | 0.30 | 0.30 |
| 14 | 0.30 | 0.25 |
| 16 | 0.30 | 0.25 |

Das Implantat besteht aus bioverträglichem Material mit adäquaten Festigkeitseigenschaften. Hierfür kommen Titan, Titanbasis-Legierungen, andere Metalle, deren Legierungen, Keramik, Glaskeramik oder keramik-ähnliche Materialien sowie biokompatible Kunststoffe in Betracht. Die Wurzelpartie **2** weist eine rauhe Oberfläche auf, welche z.B. plasma- oder keramik-beschichtet ist oder z.B. chemisch, elektro-chemisch, mechanisch oder mittels Laser behandelt ist. Eine vorteilhafte Oberflächenstruktur für die Wurzelpartie **2** ist Erfindungsgegenstand der PCT-Patentpublikation WO 99/13700. Der Implantathals **3** kann aus Titan, einer Titanbasis-Legierung, einem anderen bioverträglichem Metall bzw. Legierung bestehen und wird dann vorteilhafterweise poliert sein. Der Implantathals **3** könnte mit Keramik, Glaskeramik, keramik-ähnlichem Material, Hydroxylapatit, Kunststoff oder metallisch beschichtet werden.

Der Implantathals **3** hat eine in y-Richtung bemessene Höhe h im Bereich von z.B. 2.0 mm. Er ist zylindrisch oder erweitert sich bzw. verengt sich nach koronal trompetenförmig oder konisch.

## Patentansprüche

1.  Dentalimplantat mit:

    a) einer zuunterst, apikal gelegenen Implantatspitze (**1**);
    b) einer sich zur Implantatspitze (**1**) hin erstreckenden Wurzelpartie (**2**), die zum Einsetzen in einen Kieferknochen bestimmt ist und die eine parabolische Aussenkontur (**A**) mit der Implantatspitze (**1**) als Scheitelpunkt aufweist;
    c) einem an die Wurzelpartie (**2**) ansetzenden, sich nach koronal erstreckenden Implantathals (**3**), der zum Liegen innerhalb der Gingiva bestimmt ist; und
    d) einem an der Wurzelpartie (**2**) vorgesehenen Aussengewinde (**4**),
    **dadurch gekennzeichnet, dass**
    e) die Wurzelpartie (**2**) die parabolische Aussenkontur (**A**) über ihre gesamte Länge ($l_{max}$) hinweg bis hin zu einer theoretischen Kammlinie (**5**) aufweist, an welcher sie an den Implantathals (**3**) angrenzt.

2.  Dentalimplantat nach Anspruch 1, **dadurch gekennzeichnet, dass**

    a) das an der Wurzelpartie (**2**) vorgesehene Aussengewinde eine zu der parabolischen Aussenkontur (**A**) der Wurzelpartie (**2**) parallel verlaufende Aussenkontur aufweist und
    b) in einem Abstand von 1 mm bis 4 mm von der Kammlinie (**5**) endet.

3.  Dentalimplantat nach Anspruch 1 oder 2, **dadurch gekennzeichnet, dass**

    a) die Wurzelpartie (**2**) an der Kammlinie (**5**) einen sich in radialer x-Richtung erstreckenden maximalen Radius ($r_{max}$) aufweist;
    b) die parabolische Aussenkontur (**A**) in einem kartesischen x-y-Koordinatensystem eingeordnet, mit der Implantatspitze (1) im Ursprung positioniert, der Beziehung $l_y = K \cdot 4r_x^2$ folgt; wobei
    c) $l_y$ den jeweiligen Ordinatenwert und $r_x$ den zugehörigen Abszissenwert darstellt; und
    d) die Konstante **K** sich aus der Beziehung $K = l_{max} : 4r_{max}^2$ ergibt.

4.  Dentalimplantat nach Anspruch 3, **dadurch gekennzeichnet, dass** der maximale Radius ($r_{max}$) zwischen 1 mm und 3 mm beträgt, vorzugsweise im Bereich von 1.5 mm bis 2 mm liegt.

5.  Dentalimplantat nach einem der Ansprüche 1 bis 4, **dadurch gekennzeichnet, dass**

    a) das Aussengewinde (**4**) selbstschneidend ist;
    b) die Länge ($l_{max}$) der Wurzelpartie (**2**) mit der Steigung (**S**) des Aussengewindes (**4**) korreliert;
    c) das Aussengewinde (**4**) mit einem Abstand im Bereich von 1 mm bis 4 mm vor der Kammlinie (**5**) endet, wobei
    d) der Abstand mit zunehmender Länge ($l_{max}$) der Wurzelpartie (**2**) grösser ist.

6.  Dentalimplantat nach Anspruch 5, **dadurch gekennzeichnet, dass** die Länge ($l_{max}$) der Wurzelpartie (**2**) und die Steigung (**S**) des Aussengewindes (**4**) bei einem maximalen Radius ($r_{max}$) = 2 mm, wie folgt miteinander korrelieren:

| Länge ($l_{max}$) der Wurzelpartie (**2**) [mm] | Steigung (**S**) [mm] |
|---|---|
| 6 | 0.65 |
| 8 | 1 |
| 10 | 1 |
| 14 | 1 |
| 16 | 1 |

**7.** Dentalimplantat nach einem der Ansprüche 1 bis 6, **dadurch gekennzeichnet, dass** das Aussengewinde (**4**) mit seinen Gewindezähnen (**40**) folgende Werte aufweist:

a) die Gewindezähne (40) haben an der Wurzelpartie (2) eine sich in die y-Richtung erstreckende Höhe ($g_h$). im Bereich von 0.3 mm; und
b) die Gewindezähne (**40**) haben in x-Richtung eine Länge ($g_l$) im Bereich von 0.25 mm bis 0.5 mm.

**8.** Dentalimplantat nach Anspruch 7, **dadurch gekennzeichnet, dass**

a) mit zunehmender Länge ($l_{max}$) der Wurzelpartie (**2**) die Länge ($g_l$) der Gewindezähne (**40**) kleiner ist; und
b) das Aussengewinde (**4**) mit seinen Gewindezähnen (**40**) bei einem maximalen Radius ($r_{max}$) = 2 mm folgende Werte aufweist:

| Länge ($l_{max}$) der Wurzelpartie [mm] | Höhe ($g_h$) der Gewindezähne [mm] | Länge ($g_l$) der Gewindezähne [mm] |
|---|---|---|
| 6 | 0.3 | 0.4 |
| 8 | 0.3 | 0.4 |
| 10 | 0.3 | 0.3 |
| 14 | 0.3 | 0.25 |
| 16 | 0.3 | 0.25 |

**9.** Dentalimplantat nach einem der Ansprüche 1 bis 8, **dadurch gekennzeichnet, dass**

a) das Implantat aus bioverträglichem Material mit adäquaten Festigkeitseigenschaften, wie Titan, Titanbasis-Legierungen, anderen Metallen, deren Legierungen, Keramik, Glaskeramik, keramik-ähnlichem Material oder Kunststoff besteht; und ,
b) die Wurzelpartie (**2**) eine rauhe Oberfläche aufweist, welche plasma- oder keramik-beschichtet ist oder chemisch, elektro-chemisch, mechanisch oder mittels Laser behandelt ist.

**10.** Dentalimplantat nach einem der Ansprüche 1 bis 9, **dadurch gekennzeichnet, dass** der Implantathals (**3**)

a) aus Titan, einer Titanbasis-Legierung, einem anderen bioverträglichen Metall oder dessen Legierung besteht und poliert ist; oder
b) mit Keramik, Glaskeramik, keramik-ähnlichem Material, Hydroxylapatit, Kunststoff oder metallisch beschichtet ist.

**11.** Dentalimplantat nach einem der Ansprüche 1 bis 10, **dadurch gekennzeichnet, dass**

a) der Implantathals (**3**) eine in y-Richtung bemessene Höhe (**h**) im Bereich von 1 mm bis 3 mm aufweist; und
b) der Implantathals (**3**) zylindrisch oder nach koronal trompetenförmig bzw. konisch erweitert oder verengt ist.

**Claims**

**1.** A dental implant with:

a) a bottommost implant tip (1) located at the apex;

b) a root part (2) which extends to the implant tip (1), is intended to be fitted in a jawbone, and has a parabolic outer contour (A) with the implant tip (1) as vertex;

c) adjoining the root part (2), an implant neck (3) which extends in the coronal direction and is intended to lie inside the gingiva; and

d) an outer thread (4) provided on the root part (2),

**characterized in that**

e) the root part (2) has the parabolic outer contour (A) along its entire length ($l_{max}$) and as far as a theoretical ridge line (5) at which it adjoins the implant neck (3).

2. The dental implant as claimed in claim 1, **characterized in that**

a) the outer thread provided on the root part (2) has an outer contour extending parallel to the parabolic outer contour (A) of the root part (2), and

b) ends at a distance of 1 mm to 4 mm from the ridge line (5).

3. The dental implant as claimed in claim 1 or 2, **characterized in that**

a) the root part (2) at the ridge line (5) has the maximum radius ($r_{max}$) extending in the radial x-direction;

b) the parabolic outer contour (A), placed in a cartesian system of x-y coordinates, with the implant tip (1) positioned at the origin, follows the equation $l_y = K \cdot 4 r_x 2$, where

c) $l_y$ represents the respective ordinate value and $r_x$ represents the associated abscissa value; and

d) the constant (K) results from the equation:

$$K = l_{max} : 4\, r_{max}^{\,2}.$$

4. The dental implant as claimed in claim 3, **characterized in that** the maximum radius ($r_{max}$) is between 1 mm and 3 mm, preferably lying in the range of from 1.5 mm to 2 mm.

5. The dental implant as claimed in one of claims 1 through 4, **characterized in that**

a) the outer thread (4) is self-cutting;

b) the length ($l_{max}$) of the root part (2) correlates with the pitch (S) of the outer thread (4);

c) the outer thread (4) ends at a distance, in the range of from 1 mm to 4 mm, from the ridge line (5); with

d) the distance being greater as the length ($l_{max}$) of the root part (2) increases.

6. The dental implant as claimed in claim 5, **characterized in that** the length ($l_{max}$) of the root part (2) and the pitch (S) of the outer thread (4), given a maximum radius ($r_{max}$) = 2 mm, correlate with one another as follows:

| Length ($l_{max}$) of root part (2) [mm] | Pitch (S) [mm] |
|---|---|
| 6 | 0.65 |
| 8 | 1 |
| 10 | 1 |
| 14 | 1 |
| 16 | 1 |

7. The dental implant as claimed in one of claims 1 through 6, **characterized in that** the outer thread (4) with its thread teeth (40) has the following values:

a) at the root part (2), and extending in the y-direction, the thread teeth (40) have a height ($g_h$) in the region of 0.3 mm; and

b) in the x-direction, the thread teeth (40) have a length ($g_l$) in the range of from 0.25 mm to 0.5 mm.

8. The dental implant as claimed in claim 7, **characterized in that**

a) the length ($g_l$) of the thread teeth (40) is smaller as the length ($l_{max}$) of the root part (2) increases; and

b) the outer thread (4) with its thread teeth (40) has, given a maximum radius ($r_{max}$) = 2 mm, the following values:

| Length ($l_{max}$) of root part [mm] | Height ($g_h$) of thread teeth [mm] | Length ($g_l$) of thread teeth [mm] |
|---|---|---|
| 6 | 0.3 | 0.4 |
| 8 | 0.3 | 0.4 |
| 10 | 0.3 | 0.3 |
| 14 | 0.3 | 0.25 |
| 16 | 0.3 | 0.25 |

9. The dental implant as claimed in one of claims 1 through 8, **characterized in that**

   a) the implant is made of biocompatible material having suitable stability properties, for example titanium, titanium-based alloys, other metals, their alloys, ceramic, glass ceramic, ceramic-like material or plastic; and
   b) the root part (2) has a rough surface which is plasma-coated or ceramic-coated or is treated chemically, electrochemically, mechanically or by laser.

10. The dental implant as claimed in one of claims 1 through 9, **characterized in that** the implant neck (3)

    a) is made of titanium, a titanium-based alloy or another biocompatible metal or its alloy and is polished; or
    b) is coated with ceramic, glass ceramic, ceramic-like material, hydroxyapatite, plastic or metal.

11. The dental implant as claimed in one of claims 1 through 10, **characterized in that**

    a) measured in the y-direction, the implant neck (3) has a height (h) in the range of from 1 mm to 3 mm; and
    b) the implant neck (3) is cylindrical or is widened or narrowed in a trumpet shape or conically in the coronal direction.


**Revendications**

1. Implant dentaire comprenant :

   a) une pointe d'implant apicale inférieure (1);
   b) une partie de racine (2) s'étendant jusqu'à la pointe (1) de l'implant et qui est destinée à être insérée dans un os maxillaire et qui présente un contour externe parabolique (A) avec la pointe (1) de l'implant comme sommet;
   c) un collet d'implant (3) se raccordant à la partie de racine (2) et s'étendant vers la couronne, collet qui est destiné à se trouver à l'intérieur de la gencive; et
   d) un filet externe (4) prévu sur la partie de racine (2);
   **caractérisé en ce que** :
   e) la partie de racine (2) présente le contour externe parabolique (A) sur toute sa longueur ($l_{max}$) jusqu'à une ligne de crête théorique (5), où elle est attenante au collet (3) de l'implant.

2. Implant dentaire selon la revendication 1, **caractérisé en ce que** :

   a) le filet externe prévu sur la partie de racine (2) présente un contour externe s'étendant parallèlement au contour externe parabolique (A) de la partie de racine (2), et
   b) se termine à une distance de 1 mm à 4 mm de la ligne de crête (5).

3. Implant dentaire selon la revendication 1 ou 2, **caractérisé en ce que** :

   a) la partie de racine (2) présente sur la ligne de crête (5) un rayon maximal ($r_{max}$) s'étendant dans la direction radiale x;
   b) le contour externe parabolique (A) est disposé dans un système de coordonnées x-y cartésiennes, avec la pointe (1) de l'implant positionnée à l'origine, selon le rapport $ly = K \cdot 4r_x 2$;

c) ly représentant la valeur d'ordonnée respective et $r_x$ la valeur d'abscisse correspondante; et

d) la constante K ressort de la relation $K = l_{max}: 4 \, r_{max}^2$.

**4.** Implant dentaire selon la revendication 3, **caractérisé en ce que** le rayon maximal ($r_{max}$) se situe entre 1 mm et 3 mm, de préférence dans la plage de 1.5 mm à 2 mm.

**5.** Implant dentaire selon l'une quelconque des revendications 1 à 4, **caractérisé en ce que** :

a) le filet externe (4) est autotaraudant;

b) la longueur ($l_{max}$) de la partie de racine (2) est en corrélation avec le pas (S) du filet externe (4);

c) le filet externe (4) se termine à une distance dans la plage de 1 mm à 4 mm de la ligne de crête (5);

d) la distance étant plus grande lorsque l'on augmente la longueur ($l_{max}$) de la partie de racine (2).

**6.** Implant dentaire selon la revendication 5, **caractérisé en ce que** la longueur ($l_{max}$) de la partie de racine (2) et le pas (S) du filet externe (4) sont en corrélation mutuelle comme suit pour un rayon maximal ($r_{max}$) = 2 mm :

| Longueur $l_{max}$ de la partie de racine (2) [mm] | Pas (S) [mm] . |
|---|---|
| 6 | 0.65 |
| 8 | 1.00 |
| 10 | 1.00 |
| 14 | 1.00 |
| 16 | 1.00 |

**7.** Implant dentaire selon l'une quelconque des revendications 1 à 6, **caractérisé en ce que** le filet externe (4) présente avec ses dents (40) les valeurs suivantes :

a) les dents de filet (40) ont, sur la partie de racine (2), une hauteur ($g_h$) s'étendant dans la direction y dans la plage de 0.3 mm; et

b) les dents de filet (40) ont, dans la direction x, une longueur ($g_l$) dans la plage de 0.25 mm à 0.5 mm.

**8.** Implant dentaire selon la revendication 7, **caractérisé en ce que** :

a) lorsque la longueur ($l_{max}$) de la partie de racine (2) augmente, la longueur ($g_l$) des dents de filet (40) est plus petite; et

b) le filet externe (4) avec ses dents de filet (40) présente pour un rayon maximum de ($r_{max}$) = 2 mm les valeurs suivantes :

| Longueur ($l_{max}$) de la partie de racine [mm] | Hauteur ($g_h$) des dents de filet [mm] | Longueur ($g_1$) des dents de filet [mm] |
|---|---|---|
| 6 | 0.30 | 0.40 |
| 8 | 0.30 | 0.40 |
| 10 | 0.30 | 0.30 |
| 14 | 0.30 | 0.25 |
| 16 | 0.30 | 0.25 |

**9.** Implant selon l'une quelconque des revendications 1 à 8, **caractérisé en ce que** :

a) l'implant est constitué d'un matériau biocompatible ayant des propriétés de résistance adéquate, tels que le titane, des alliages de titane, d'autres métaux, leurs alliages, la céramique, la vitrocéramique, un matériau analogue à la céramique ou un matériau synthétique; et

b) la partie de racine (2) présente une surface rugueuse, qui est revêtue de plasma ou de céramique ou est traitée par voie chimique, électrochimique, mécanique ou au laser.

**10.** Implant dentaire selon l'une quelconque des revendications 1 à 9, **caractérisé en ce que** le collet (3) de l'implant :

a) est constitué de titane, d'un alliage à base de titane, d'un autre métal biocompatible ou d'un de ses alliages et est poli; ou
b) est revêtu de céramique, de vitrocéramique, d'un matériau similaire à la céramique, d'hydroxyapatite, d'un matériau synthétique ou d'un métal.

**11.** Implant dentaire selon l'une quelconque des revendications 1 à 10, **caractérisé en ce que** :

a) le collet (3) de l'implant présente une hauteur (h) mesurée dans la direction y dans la plage de 1 mm à 3 mm; et
b) le collet (3) de l'implant est cylindrique ou élargi ou rétréci vers la couronne en forme de trompette ou en forme de cône.

# Fig. 1

# Fig. 2

# Fig. 3